# FASCICULE DE BREVET EUROPEEN

(11) **EP 2 024 841 B1**
(45) Date de publication et mention de la délivrance du brevet: **01.09.2010**
(21) Numéro de dépôt: 07765953.0
(22) Date de dépôt: 25.05.2007
(51) Int. Cl.: G06F 12/10, G06F 17/30

(54) **PROCEDE DE GESTION D'UNE MEMOIRE COMPORTANT DES ELEMENTS POURVUS D'UNE INFORMATION D'IDENTIFICATION INDICATIVE DE L'ASCENDANCE DESDITS ELEMENTS**
VERFAHREN ZUR SPEICHERVERWALTUNG MIT ELEMENTEN FÜR DIE BEREITSTELLUNG VON IDENTIFIZIERUNGSINFORMATIONEN ZUR ANGABE DER CHRONOLOGIE DIESER ELEMENTE
METHOD OF MANAGING A MEMORY INCLUDING ELEMENTS PROVIDING IDENTIFICATION INFORMATION INDICATING THE CHRONOLOGY OF SAID ELEMENTS

(30) Priorité: 07.06.2006 FR 0605069
(43) Date de publication de la demande: 18.02.2009
(73) Titulaire: Morpho, 75015 Paris (FR)
(72) Inventeur: DECROIX, David, F-93100 Montreuil (FR); GONCALVES, Louis-Philippe, F-95170 Deuil la Barre (FR); PEPIN, Cyrille, F-78570 Andresy (FR)
(74) Mandataire: Lavialle, Bruno François Stéphane
(86) Numéro de dépôt international: PCT/FR2007/000877
(87) Numéro de publication internationale: WO 2007/141406

(56) Documents cités:
- WO-A2-99/05617
- US-A- 4 758 946
- COMER D: "THE UBIQUITOUS B.TREE" ACM COMPUTING SURVEYS, NEW YORK, NY, US, vol. 11, no. 2, juin 1979 (1979-06), pages 121-137, XP002066573 ISSN: 0360-0300

## Description

La présente invention concerne un procédé de gestion d'une mémoire telle qu'une mémoire EEPROM ("Electricaly Erasable Programmable Read Only Memory", mémoire permanente programmable et effaçable électriquement). Une telle mémoire est par exemple utilisable dans une carte à circuit intégré.

### ARRIERE PLAN DE L'INVENTION

Dans une telle mémoire, les éléments mémorisés sont généralement organisés selon une hiérarchie (ou arborescence) et il est connu de gérer ces éléments au moyen d'une table d'allocation d'éléments et/ou de pointeurs. On parle alors d'un chaînage physique des éléments entre eux puisqu'à chaque élément correspond une adresse physique. Une structure de stockage de ce type est décrite dans le document WO 9905617. Cette correspondance figure dans la table d'allocation d'éléments, ce qui permet en théorie de trouver rapidement un élément recherché. Un inconvénient de l'utilisation d'une table d'allocation d'éléments est qu'elle occupe une partie de l'espace mémoire qui n'est plus disponible pour l'enregistrement des données. En outre, tout changement dans la hiérarchie des éléments, tel qu'un déplacement, une suppression, une création d'un élément, nécessite une modification correspondante de la table d'allocation d'éléments et dans le cas d'une suppression également des éléments ayant un lien de parenté avec l'élément supprimé. Ces mises à jour de la table d'allocation d'éléments ralentissent la gestion des éléments et entraînent une mobilisation des moyens informatiques auxquels la mémoire est raccordée.

Ces inconvénients sont particulièrement gênants lorsque la mémoire en question est utilisée dans une carte à circuit intégré : la mémoire a une taille relativement réduite et les lecteurs de cartes à circuits intégrés disposent de ressources informatiques limitées.

En outre, lorsque la mémoire contient des éléments d'accès libre et des éléments d'accès restreint uniquement à des personnes autorisées, une personne non autorisée peut tenter d'accéder aux éléments d'accès restreint en demandant au pointeur d'aller sur l'adresse d'un élément d'accès libre tout en perturbant le fonctionnement du pointeur (en le soumettant par exemple à un rayon laser). Il existe alors un risque que la perturbation amène le pointeur sur un élément d'accès restreint sans que soit possible une vérification de la concordance entre l'adresse demandée et l'élément atteint.

### OBJET DE L'INVENTION

Il serait donc intéressant de disposer d'un procédé de gestion de mémoire ne présentant pas les inconvénients précités.

### RESUME DE L'INVENTION

A cet effet, on prévoit, selon l'invention, un procédé de gestion d'une mémoire comportant des éléments mémorisés qui sont organisés selon une hiérarchie et qui comportent chacun un entête contenant une information d'identification individuelle et un corps contenant des données, l'information d'identification de chaque élément étant codée sur une pluralité de bits susceptibles de prendre une première et une deuxième valeur, l'information d'identification de chaque élément étant obtenue en reprenant l'information d'identification d'un élément constituant dans la hiérarchie un antécédent direct de l'élément concerné et en changeant dans cette information d'identification de l'antécédent la valeur d'un bit à la première valeur située après le dernier bit à la deuxième valeur par référence à un sens de lecture de l'information d'identification.

Ainsi, l'information d'identification d'un élément permet d'identifier l'élément et de connaître l'ascendance dudit élément. L'élément porte ainsi en lui-même l'information nécessaire permettant de le situer dans la hiérarchie des éléments.

De préférence, les bits de l'information d'identification de l'élément le plus haut dans la hiérarchie sont tous à la première valeur.

Il est alors possible d'avoir un maximum d'éléments identifiés par le procédé de l'invention.

Avantageusement, la suppression d'un des éléments de la mémoire est suivie par le regroupement des éléments restant.

Comme chaque élément porte en lui-même l'information permettant de le repérer dans la hiérarchie des éléments, le déplacement, la suppression, ou la création d'un élément ne nécessite aucune mise à jour d'une table d'adressage ou des autres éléments et peut donc être fait de manière rapide et fiable. Le regroupement des éléments restant permet d'accélérer l'accès à ces éléments. Ceci permet également de récupérer de l'espace mémoire.

D'autres caractéristiques et avantages de l'invention ressortiront à la lecture de la description qui suit d'un mode de mise en oeuvre particulier non limitatif de l'invention.

### BREVE DESCRIPTION DES DESSINS

Il sera fait référence aux dessins annexés, parmi lesquels :
- la figure 1 est une vue schématique de la hiérarchie d'une mémoire gérée conformément au procédé de l'invention,
- la figure 2 est une représentation schématique partielle, sous forme linéaire, de cette mémoire.

### DESCRIPTION DETAILLEE DE L'INVENTION

En référence aux figures, la mémoire, généralement désignée en 1, est de type EEPROM.

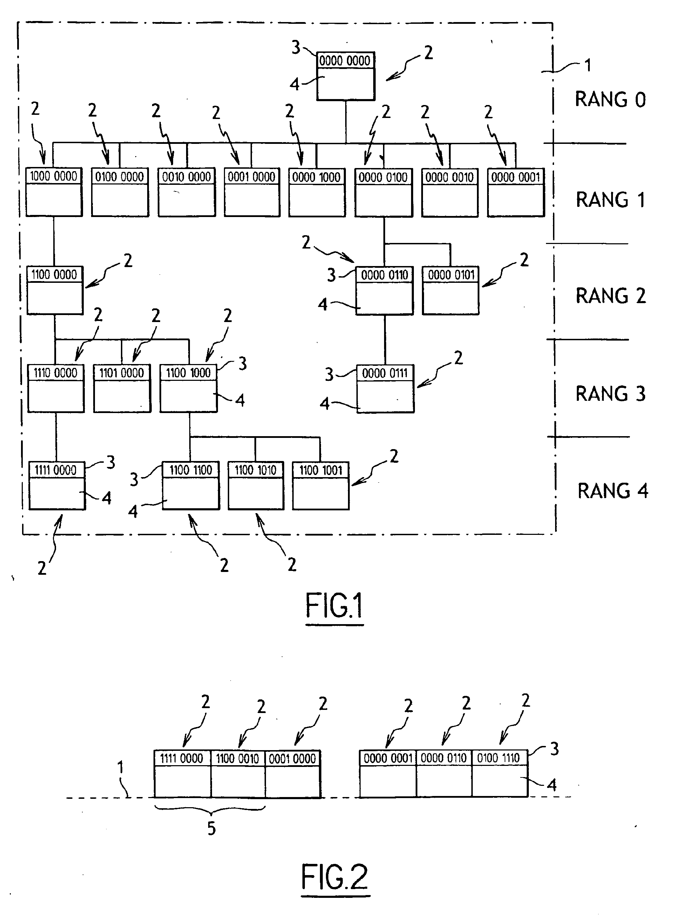

La mémoire 1 comprend des éléments mémorisés 2 organisés selon une hiérarchie représentée sur la figure 1. Par élément mémorisé, on entend un élément de mémoire de type répertoire, c'est-à-dire susceptible de contenir des fichiers. Chaque élément mémorisé comporte un entête 3 contenant une information d'identification individuelle et un corps 4 contenant des données.

L'information d'identification de chaque élément est codée sur une pluralité de bits susceptibles de prendre une première et une deuxième valeur. En l'espèce l'information d'identification est codée sur huit bits pouvant prendre les valeurs 0 et 1.

L'élément le plus haut dans la hiérarchie a ici les huit bits de son information d'identification à 0.

L'élément 0000 0000 est l'antécédent direct de huit éléments dont certains sont eux-mêmes l'antécédent d'autres éléments et ainsi de suite.

L'information d'identification de chaque élément est obtenue en reprenant l'information d'identification d'un élément constituant dans la hiérarchie un antécédent direct de l'élément concerné et en changeant dans cette information d'identification de l'antécédent la valeur d'un bit à 0 après le dernier bit à 1 par référence à un sens de lecture de l'information d'identification (ici de gauche à droite).

Les descendants de l'élément 0000 0000 ont ainsi pour information d'identification respectivement : 1000 0000, 0100 0000, 0010 0000, 0001 0000, 0000 1000, 0000 0100, 0000 0010, 0000 0001.

On comprend que le nombre de bits à 0 situés après le dernier bit à 1 par référence au sens de lecture conditionne le nombre de descendants que peut avoir un élément. Au maximum, la hiérarchie comprend donc ici huit rangs et la mémoire comprend deux cent cinquante six éléments.

Ainsi, le nombre de descendants que peut avoir chacun des éléments 1000 0000, 0100 0000, 0010 0000, 0001 0000, 0000 1000, 0000 0100, 0000 0010, 0000 0001 est respectivement : 7, 6, 5, 4, 3, 2, 2, 1, 0.

L'élément 1000 0000 (de rang 1) a ici trois descendants ayant comme information d'identification respectivement : 1100 0000, 1010 0000, 1001 0000.

L'élément 1100 0000 (de rang 2) a lui aussi trois descendants ayant comme information d'identification respectivement : 1110 0000, 1101 0000, 1100 1000. L'élément 1100 0000 peut avoir trois autres descendants.

L'élément 1110 0000 (de rang 3) a un descendant ayant comme information d'identification 1111 0000. L'élément 1110 0000 peut avoir quatre autres descendants.

L'élément 1100 1000 (de rang 3) a lui aussi trois descendants ayant comme information d'identification respectivement : 1100 1100, 1100 1010, 1100 1001. Le nombre de descendants que peut avoir chacun des éléments 1100 1100, 1100 1010, 1100 1001 est respectivement : 2, 1, 0.

L'élément 0000 0100 (de rang 1) a ici deux descendants ayant comme information d'identification respectivement : 0000 0110, 0000 0101.

L'élément 0000 0110 (de rang 2) n'a (et ne peut avoir) qu'un descendant, ayant comme information d'identification 0000 0111. L'élément 0000 0101 ne peut avoir lui de descendants.

On comprend que le nombre de bits à 1 permet de déterminer le rang de l'élément dans la hiérarchie (l'élément 0000 0000 étant au rang 0). Le dernier bit à 1 par référence au sens de lecture permet d'identifier l'élément dans son rang tandis que les bits précédents identifient son antécédent direct (et donc tous ses antécédents puisque chaque élément reprend l'information d'identification de son antécédent direct).

Ainsi, lorsqu'est atteint l'élément 0000 0111, on sait que ses antécédents successifs sont les éléments 0000 0110, 0000 0100 et 0000 0000.

En imaginant que l'élément 0000 0100 soit d'accès restreint à des personnes autorisées, il est aisé de savoir que l'élément 0000 0111 est lui aussi d'accès restreint.

La descendance d'un élément est également aisément identifiable. Ainsi, les descendants de l'éléments 0010 0000 ont tous une information d'identification commençant par les bits 001.

Le procédé de l'invention permet donc de réaliser un chaînage logique (par opposition à physique) entre les éléments.

Sur la figure 2, la mémoire 1 est représentée de manière linéaire et comprend une zone d'accès rapide 5.

Le procédé comprend l'étape d'identifier au moins un élément 2 d'accès fréquent et d'enregistrer dans la zone d'accès rapide 5 l'élément 2 d'accès fréquent. Ceci ne pose pas de problème avec le procédé de l'invention car il suffit simplement de déplacer les éléments 2 sans mettre à jour les autres éléments ou une table d'adressage.

En outre, la suppression d'un des éléments 2, par exemple l'élément 0000 0001, de la mémoire 1 est suivie par le regroupement des éléments restants : les éléments 0000 0110 et 0100 1110 sont alors simplement déplacés pour être accolés aux autres éléments.

Les éléments 2 n'ont donc pas besoin d'être organisés physiquement dans la mémoire 1, c'est-à-dire que leur emplacement physique dans la mémoire est sans importance du point de vue de la gestion de ceux-ci (sauf si une zone de la mémoire est d'accès plus rapide comme décrit ci-dessus). Ceci simplifie et accélère les opérations d'écriture, déplacement, suppression et création d'éléments

Bien entendu, l'invention n'est pas limitée au mode de mise en oeuvre décrit mais englobe toute variante entrant dans le cadre de l'invention telle que définie par les revendications.

En particulier, l'information d'identification peut être codée sur un nombre de bits différent. Ainsi, dans l'exemple décrit, l'information d'identification est codée sur huit bits mais peut l'être sur un plus grand nombre de bits. En outre, l'élément le plus haut peut ne pas avoir tous ses bits à la même valeur, l'élément le plus haut peut avoir comme information d'identification 1111 1111 et ses descendants 0111 1111, 1011 1111, 1101 1111, 1110 1111 et ainsi de suite...

L'arborescence des éléments peut être différente de celle décrite et les éléments peuvent avoir des structures différentes.

## Revendications

1. Procédé de gestion d'une mémoire (1) comportant des éléments mémorisés (2) qui sont organisés selon une hiérarchie et qui comportent chacun un entête (3) contenant une information d'identification individuelle et un corps (4) contenant des données, **caractérisé en ce que** l'information d'identification de chaque élément est codée sur une pluralité de bits susceptibles de prendre une première et une deuxième valeur, et **en ce que** l'information d'identification de chaque élément est obtenue en reprenant l'information d'identification d'un élément constituant dans la hiérarchie un antécédent direct de l'élément concerné et en changeant dans cette information d'identification de l'antécédent la valeur d'un bit à la première valeur située après le dernier bit à la deuxième valeur par référence à un sens de lecture de l'information d'identification.

2. Procédé selon la revendication 1, dans lequel les bits de l'information d'identification de l'élément le plus haut dans la hiérarchie sont tous à la première valeur.

3. Procédé selon la revendication 1, dans lequel la suppression d'un des éléments (2) de la mémoire (1) est suivie par le regroupement des éléments restant.

4. Procédé selon la revendication 1, dans lequel la mémoire (1) comprend une zone rapide d'accès (5) et le procédé comprend l'étape d'identifier au moins un élément (2) d'accès fréquent et d'enregistrer dans la zone d'accès rapide l'élément d'accès fréquent.

## Claims

1. A method of managing a memory (1) comprising stored elements (2) that are organized in a hierarchy, each having a header (3) containing individual identity information and a body (4) containing data, the method being **characterized in that** the identity information of each element is encoded on a plurality of bits each of which can take a first value or a second value, and **in that** the identity information of each element is obtained by repeating the identity information of an element constituting a direct antecedent of the element in question in the hierarchy and in said identity information of the antecedent, by changing the value of a first value bit that follows the last second value bit in a direction for reading the identity information.

2. A method according to claim 1, in which the bits of the identity information of the highest element in the hierarchy are all first value bits.

3. A method according to claim 1, in which deletion of one of the elements (2) from the memory (1) is followed by the remaining elements being regrouped.

4. A method according to claim 1, in which the memory (1) has a rapid access zone (5) and the method includes the step of identifying at least one frequently accessed element (2) and of recording the frequency access element in the rapid access zone.

## Patentansprüche

1. Verfahren zum Verwalten eines Speichers (1), umfassend gespeicherte Elemente (2), die gemäß einer Hierarchie organisiert sind und jeweils einen Kopf (3) umfassen, der eine individuelle Identifikationsinformation enthält, sowie einen Körper (4), der Daten enthält, **dadurch gekennzeichnet, dass** die Identifikationsinformation jedes Elements mit einer Vielzahl von Bits codiert ist, die einen ersten Wert und einen zweiten Wert annehmen können, und dass die Identifikationsinformation jedes Elements **dadurch** erhalten wird, dass die Identifikationsinformation eines Elements, das in der Hierarchie einen direkten Vorgänger des betreffenden Elements bildet, übernommen und in dieser Identifikationsinformation des Vorgängers derjenige Wert eines Bits mit dem ersten Wert, der sich nach dem letzten Bit mit dem zweiten Wert befindet, bezogen auf eine Leserichtung der Informationsidentifikation geändert wird.

2. Verfahren nach Anspruch 1, wobei die Bits der Identifikationsinformation des höchsten Elements in der Hierarchie alle den ersten Wert haben.

3. Verfahren nach Anspruch 1, wobei auf das Löschen eines der Elemente (2) des Speichers (1) das Umgruppieren der verbleibenden Elemente folgt.

4. Verfahren nach Anspruch 1, wobei der Speicher (1) einen Schnellzugriffsbereich (5) umfasst und das Verfahren den Schritt des Identifizierens mindestens eines Elements (2) mit häufigem Zugriff und des Speicherns des Elements mit häufigem Zugriff in dem Schnellzugriffsbereich umfasst.
